# EUROPEAN PATENT APPLICATION

(11) **EP 2 472 132 A1**
(43) Date of publication of application: **04.07.2012**
(21) Application number: 10811947.0
(22) Date of filing: 26.08.2010
(51) Int. Cl.: F16C 17/02, F16H 57/02, F03D 1/06, F03D 11/00

(54) **PLANETARY BEARING STRUCTURE**

(30) Priority: 26.08.2009 JP 2009195749
(71) Applicant: Mitsubishi Heavy Industries, Ltd., Tokyo 108-8215 (JP)
(72) Inventor: ISAYAMA, Shuichi, Tokyo 108-8215 (JP); NISHIDA, Hideaki, Tokyo 108-8215 (JP)
(74) Representative: Intès, Didier Gérard André
(86) International application number: PCT/JP2010/064486
(87) International publication number: WO 2011/024898

(57) **Abstract**

Provided is a planet bearing structure for a wind turbine generator, capable of reducing the risk of causing seizure or wear in a planet bearing of the wind turbine generator in which a slide bearing is used in a bearing portion, by improving and stabilizing formation of an oil film on a sliding surface having division surfaces. In a planet bearing structure that includes a slide bearing (50A) attached on the inner circumferential surface of a shaft hole of a planet gear constituting a gearbox, and in which the slide bearing (50A) rotates about a planet pin that is secured to a carrier, together with the planet gear, the sliding surface of the slide bearing (50A) has one or more division lines (La) that are formed by axis-wise joint surfaces and that intersect with the rotational direction, and the division lines (La) are formed in an inclined state with respect to the axial direction.

## Description

### {Technical Field}

The present invention relates to a planet bearing structure applied to a sun-and-planet speed increasing mechanism of a wind turbine generator, for example.

### {Background Art}

The wind turbine generator is an apparatus in which a rotor head provided with wind turbine blades rotates upon reception of a wind force, and the rotational speed thereof is increased by a gearbox to drive a power generator to generate power.
Examples of the gearbox that increases the rotational speed of the rotor head include a planetary-type sun-and-planet gear speed increasing mechanism, for example. The planetary-type sun-and-planet gear speed increasing mechanism includes a plurality of planet gears attached to a carrier that rotates together with an input shaft, and is configured such that the planet gears revolve while being engaged with a sun gear that rotates together with an output shaft and engaged with an internal gear secured to a housing of the gearbox. Specifically, the planetary-type sun-and-planet gear speed increasing mechanism is an apparatus that increases the rotational speed of the carrier, (the revolutions of the planet gears) coupled to the input shaft according to the gear ratios set in the planet gears, the sun gear, and the internal gear and that outputs it from the output shaft coupled to the sun gear.

Each of the planet gears of the above-described planetary-type sun-and-planet speed increasing mechanism is rotatably supported by the carrier via a planet bearing. As the planet bearing, a rolling bearing or a solid-type slide bearing having no joint surfaces is usually used.
However, the rolling bearing has disadvantages in that the cost thereof is high compared with a slide bearing, and the life is relatively short, thus requiring maintenance.
On the other hand, the solid-type slide bearing having no joint surfaces is high in cost compared with a division-type slide bearing having joint surfaces and also has a problem of oil film formation, to be described later. Therefore, a technology for safely applying an inexpensive division-type slide bearing having joint surfaces to the planet gear is desired.

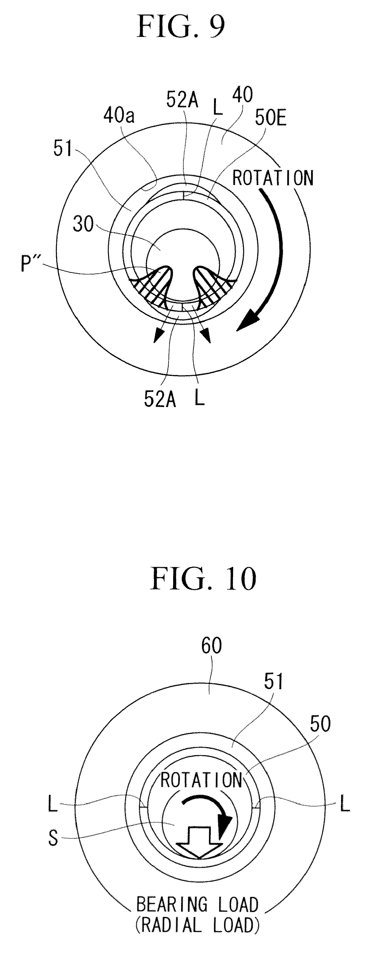

Fig. 10 shows a conventional bearing structure that uses a division-type slide bearing having joint surfaces. In the bearing structure shown in the figure, half-split cylinders for a slide bearing 50 individually manufactured, are jointed at division lines L, are attached on the inner circumferential surface of a stationary member 60, and are used; and a rotary shaft S rotates on the inner circumference of the slide bearing 50.
At this time, a bearing load (radial load) is imposed on the sliding surface of the slide bearing 50, which is a stationary side, in a direction indicated by a solid-white arrow in the figure, and the rotation of the rotary shaft S forms a film of lubricating oil on the sliding surface of the bearing, thus producing pressure on the film of lubricating oil. Therefore, the sliding surface of the slide bearing 50 is prevented from being brought into contact with the rotary shaft S due to the pressure of lubricating oil forming the oil film. Note that reference numeral 51 in the figure denotes a bearing back metal disposed on the outer circumference of the slide bearing 50.

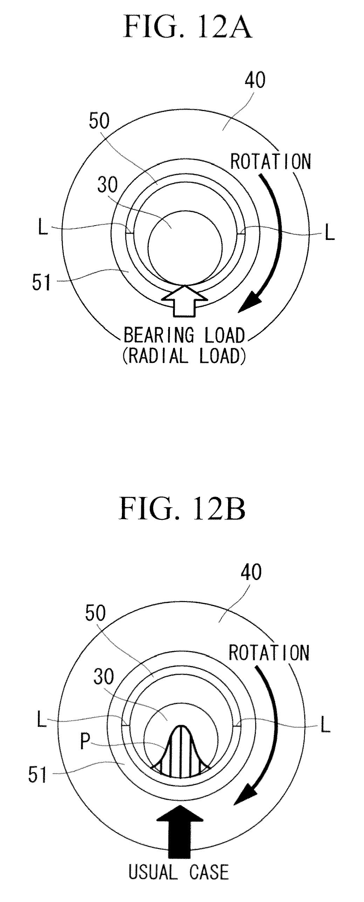

On the other hand, Fig. 12A shows a case where a division-type slide bearing having joint surfaces is applied to a conventional planet bearing structure. In the planet bearing structure shown in the figure, the slide bearing 50 is attached on the inner circumferential surface of the planet gear 40 via the bearing back metal 51 and is used. In this case, since the slide bearing 50 rotates on the outer circumference of the planet pin 30 secured to the carrier (not shown) side, together with the planet gears 40 and the bearing back metal 51, in other words, the slide bearing 50 rotates while revolving, a bearing load is imposed in the tangential direction of the orbit path due to the torque.
At this time, a bearing load (radial load) occurs on the sliding surfaces of the slide bearing 50 and the planet pin 30 in a direction indicated by a solid-white arrow in the figure, and the rotation of the slide bearing 50 forms a film of lubricating oil on the sliding surface of the bearing, thus producing pressure on the film of lubricating oil. Therefore, the sliding surface of the slide bearing 50 is prevented from being brought into contact with the planet pin 30 due to the pressure of lubricating oil forming the oil film. Note that, since forced oil feeding to a bearing portion is usually required to use the slide bearing 50 as a planet bearing, a lubricant structure for reliably feeding lubricating oil to the sliding surface by using a lubricating oil pump or the like is employed.

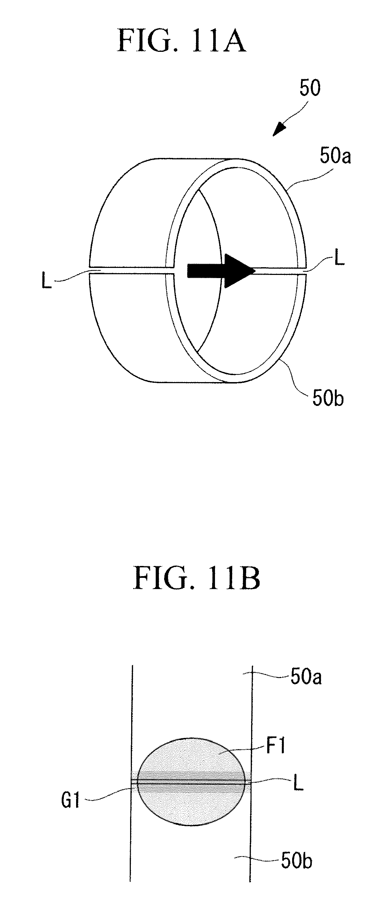

The above-described slide bearing 50 has a cylindrical-shaped structure that is obtained when PEEK (polyether ether ketone) resin is put on flat plates, for example, and the flat plates are pressed into a semicylinder shape and are jointed. Specifically, as shown in Fig. 11A, for example, the slide bearing 50 using PEEK resin cannot be formed in a cylindrical shape having no joint surfaces (hereinafter, also referred to as "division lines") on the sliding surface because of the manufacturing method in which a pair of half-split cylinders 50a and 50b are jointed to have a cylindrical shape, and therefore, the existence of (division lines L that are formed at the joint surfaces between both half-split cylinders is unavoidable. Note that, in this case, the division lines L are formed so as to be orthogonal to the rotational direction of the planet gear 40 and the slide bearing 50.
Such a slide bearing, even a slide bearing that does not use PEEK resin, can be manufactured at low cost by employing a half-split structure in which the division lines L are formed or a wrapped-bush structure, compared with a case where a solid-type cylindrical slide bearing is manufactured.

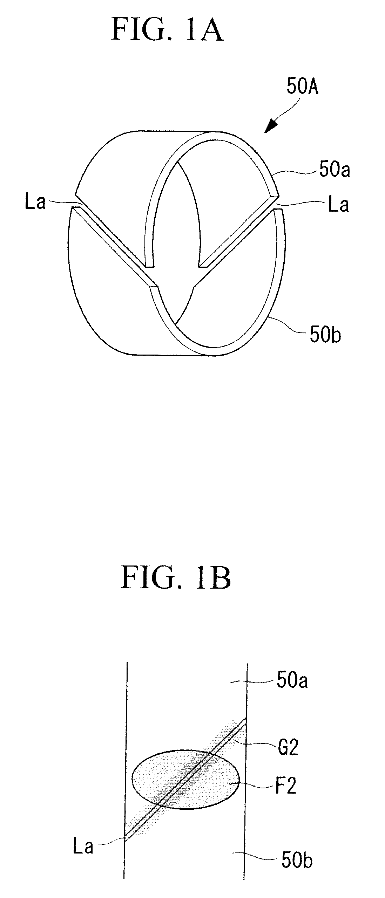

Examples of a bearing structure for supporting a crankshaft etc. in an internal-combustion engine include a cylindrical slide bearing obtained by jointing half-split cylindrical upper metal and lower metal. In this bearing structure, the slide bearing side does not rotate, unlike the planet bearing structure in which the slide bearing 50 rotates together with the planet gear 40 (for example, see Fig. 1 and other figures in Patent Document 1).

### {Citation List}

### {Patent Literature}

{PTL 1} Japanese Unexamined Patent Application, Publication No. 2004-245388

### {Summary of Invention}

### {Technical Problem}

In the planetary-type sun-and-planet speed increasing mechanism for the wind turbine generator, when a slide bearing is used as the planet bearing, the planet pin is unavoidably brought into contact with the slide bearing surface if the planet bearing rotates at a low speed. Thus, a high-heat-resistance soft alloy or a resin material is employed as a material for the slide bearing surface, and further, lubricating oil pressure is produced on the sliding surface to prevent seizure or wear.
However, in a slide bearing in which the bearing side rotates and the division lines L exist on the sliding surface, it is difficult to form the oil film pressure at the positions of the division lines L on the sliding surface, thus significantly reducing the bearing performance.

More specifically, in the usual slide bearing (see Fig. 10) in which the rotary shaft S rotates, when the division lines L existing on the slide bearing 50, which is a stationary side, are disposed at horizontal positions, the position on which a downward bearing load is imposed from the rotary shaft does not match the positions of the division lines L.
On the other hand, in the planet bearing structure (see Fig. 12A₎ in which the slide bearing 50 side rotates, the positions on the sliding surface on which the bearing load is imposed changes based on the rotational position of the slide bearing 50. Thus, as shown in Fig. 12B, for example, in a state where the position of the bearing-load imposed on the sliding surface does not match the positions of the division lines L, a favorable oil film pressure distribution P is formed on the sliding surface, and therefore, the pressure of lubricating oil prevents contact between the planet pin 30 and the slide bearing 50.

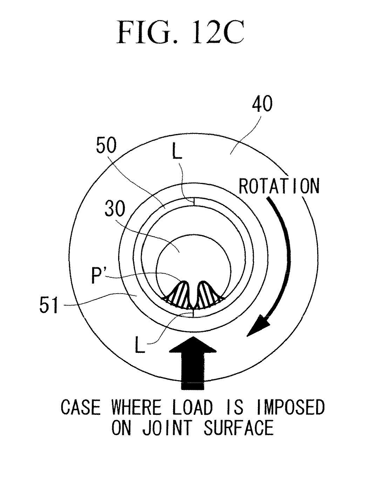

However, as shown in Fig. 12C, for example, in a state where the slide bearing 50 side rotates and the position of the bearing-load imposed on the sliding surface coincides with any of the positions of the division lines L, a favorable oil film pressure distribution P is not formed on the sliding surface because the pressure of lubricating oil is released through the division line L. Therefore, it is difficult to use the pressure of lubricating oil to prevent contact with the planet pin 30. Specifically, as shown in Fig. 12C, since an oil film pressure distribution P' formed on the sliding surface has almost no oil film pressure at the position of the division surface L, it is difficult to use the pressure of lubricating oil to prevent the planet pin 30 from being brought into contact with the sliding surface. Therefore, there is a risk that the planet pin 30 is brought into contact with the sliding surface of the slide bearing 50, thus causing seizure or wear in the bearing. Note that, in Fig. 11B, reference symbol F1 denotes a region where oil film pressure occurs (region where the oil pressure is high in the oil film distribution P'), and reference symbol G1 denotes a region where oil film pressure does not occur (region where the oil pressure is low in the oil film distribution p').
The present invention has been made in view of the above-described circumstances, and an object thereof is to provide a planet bearing structure that can be applied to a wind turbine generator etc., and that is capable of reducing the risk of causing seizure or wear in a planet bearing of the wind turbine generator, in which a slide bearing is used in a bearing portion, by improving and stabilizing the formation of an oil film on a sliding surface having division surfaces L.

### {Solution to Problem}

In order to solve the above-described problems, the present invention employs the following solutions.
According to a first aspect, the present invention provides a planet bearing structure including a slide bearing attached on the inner circumferential surface of a shaft hole of a planet gear constituting a gearbox, the slide bearing rotating about a planet pin that is secured to a carrier, together with the planet gear, in which: a sliding surface of the slide bearing has one or more division lines that are formed by axis-wise joint surfaces and that intersect with the rotational direction; and the division lines are formed in an inclined state with respect to the axial direction or in a stepwise manner in the axial direction.

According to this planet bearing structure, the sliding surfaces of the slide bearing has one or more division lines that are formed by axis-wise joint surfaces and that intersect with the rotational direction, and the division lines are formed in an inclined state with respect to the axial direction or in a stepwise manner in the axial direction; therefore, a bearing load is not imposed on the whole axis-wise lengths of the division lines on the sliding surface. Specifically, on the sliding surface of the slide bearing, a bearing load is imposed on only a substantially straight narrow region with which the planet pin is brought into contact, in the axis-wise straight line orthogonal to the rotational direction of the slide bearing; thus, this bearing-load imposed region intersects with or coincides with only a partial area of each of the division lines, which are formed in the inclined state or in the stepwise manner. Then, the area of the division line that intersects with or coincides with the bearing-load imposed region is moved in the axial direction due to the rotation of the slide bearing; thus, in the range of regions where oil film pressure for supporting a bearing load occurs, the proportion of a region where oil film pressure does not occur because of the influence of the division lines is reduced, compared with a case where the division lines are formed so as to be orthogonal to the rotational direction of the planet gear and the slide bearing.

In the above-described first aspect, it is preferable that the slide bearing be divided into a plurality of slide bearing parts in the width direction. Thus, it becomes easy to manufacture the slide bearing even if it is increased in size.
In particular, to form the division lines in a stepwise manner, the division lines are mutually shifted in the rotational direction in divided slide bearing parts; specifically, the phases of the division lines are shifted, thus easily realizing the stepwise division.

According to a second aspect, the present invention provides a planet bearing structure including a slide bearing attached on the inner circumferential surface of a shaft hole of a planet gear constituting a gearbox, the slide bearing rotating about a planet pin that is secured to a carrier, together with the planet gear, in which: a sliding surface of the slide bearing has one or more division lines that are formed by axis-wise joint surfaces and that intersect with the rotational direction; and a bearing-load avoiding portion is provided at the position of any of the division lines on the sliding surface to receive a bearing load at both sides of the division line in the rotational direction.

According to this planet bearing structure, the sliding surface of the slide bearing has one or more division lines that are formed by axis-wise joint surfaces and that intersect with the rotational direction, and the bearing-load avoiding portion is provided at the positions of any of the division lines on the sliding surface so as to receive a bearing load at both sides of the division line in the rotational direction; therefore, it is possible to prevent a case where oil film pressure does not occur because a bearing load is imposed on the position of the division line, and to support the bearing load by using the oil film pressure formed at both sides of the division line in the rotational direction.
In this case, it is preferable that the bearing-load avoiding portion be a concave space produced between an outer circle of a double-circle rotational trajectory traced by the rotation of the sliding surface and the outer circumferential surface of the planet pin, or a concave space produced at an outer circumferential side of a circle rotational trajectory traced by the rotation of the sliding surface.
In a concrete example, when half-split cylinders are jointed to form two division lines, if the slide bearing is formed in an elliptical shape and the division lines are disposed along the long axis thereof, a concave space that is not brought into contact with the planet pin is produced on the sliding surface. Further, in another concrete example, when a concave portion is formed at the position corresponding to the division line, on the inner circumferential surface of the bearing back metal disposed on the outer circumference of the slide bearing, the rigidity of the slide bearing is reduced at the position of the division line on the sliding surface; thus, the slide bearing is deformed due to the bearing load to produce a concave space.

### {Advantageous Effects of Invention}

According to the present invention described above, in the planet bearing of the wind turbine generator, in which the slide bearing is used in the bearing portion of the gearbox, release of oil film pressure through the division lines on the sliding surface is prevented or suppressed to improve and stabilize oil film formation at the positions of the division lines, and a bearing load is supported at portions other than the positions of the division lines through which the oil film pressure is released; therefore, it is possible to reduce the risk of causing seizure or wear. As a result, it is possible to employ, as a planet bearing, not only a slide bearing using PEEK resin, for which formation of the division lines is unavoidable, but also a slide bearing having a wrapped-bush structure or a half-split structure, which can be inexpensively manufactured. Therefore, it is possible to employ an inexpensive slide bearing for the gearbox of the wind turbine generator and to improve the reliability and the durability of the wind turbine generator.

### {Brief Description of Drawings}

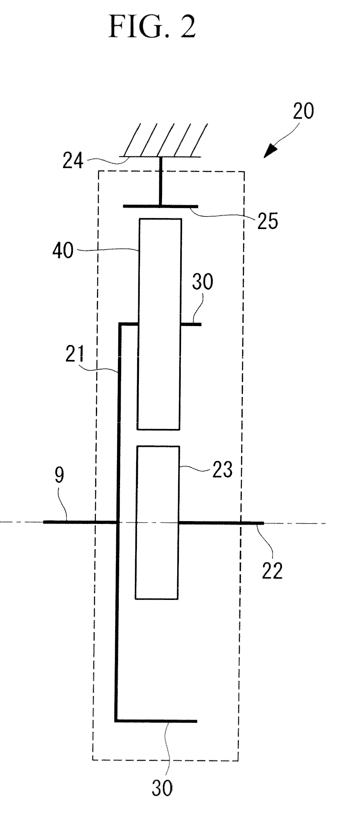

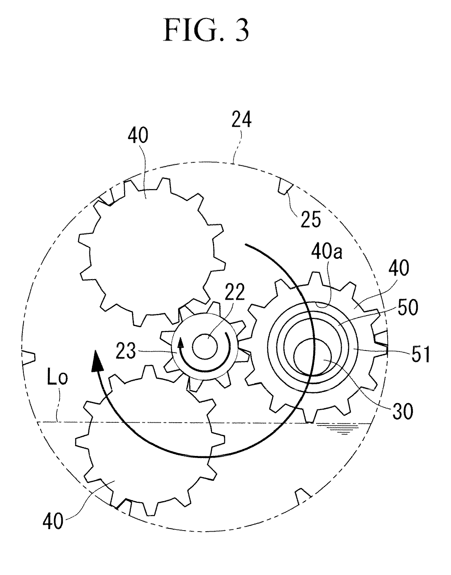

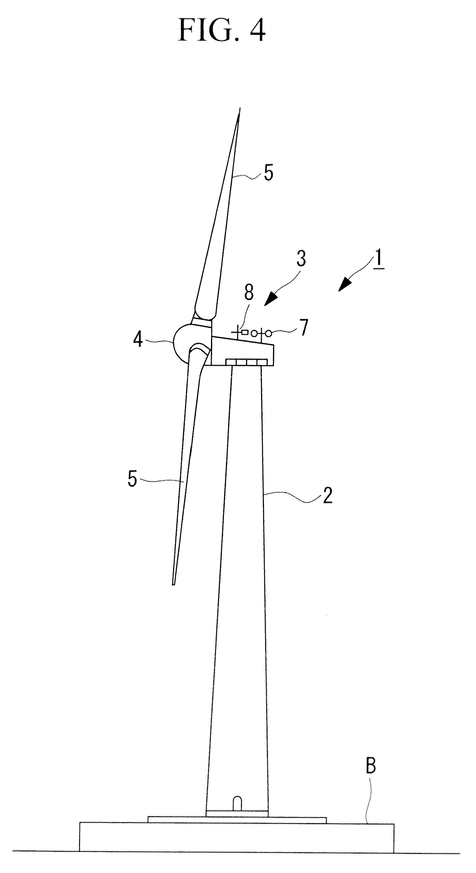

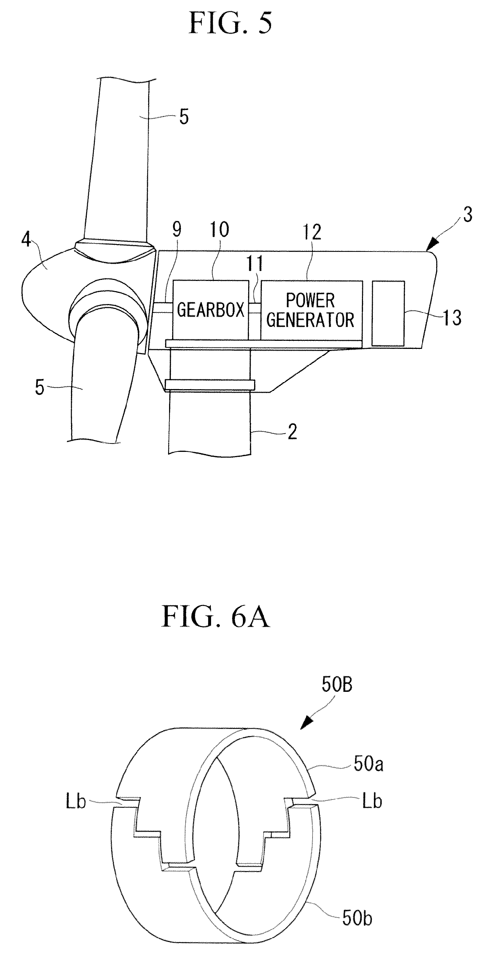

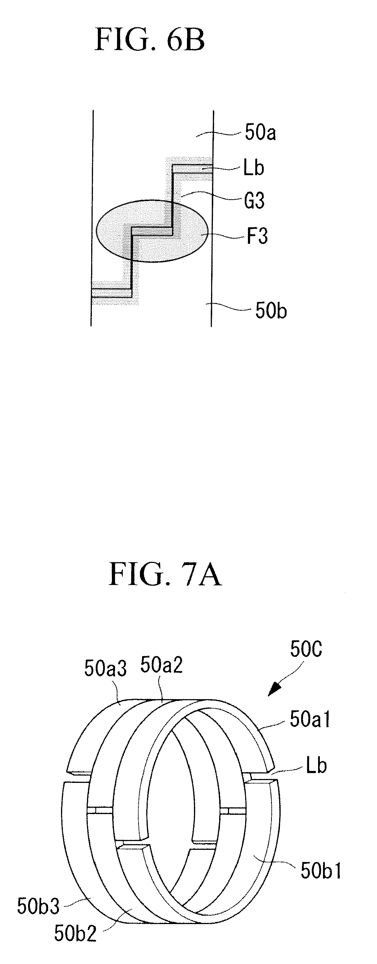

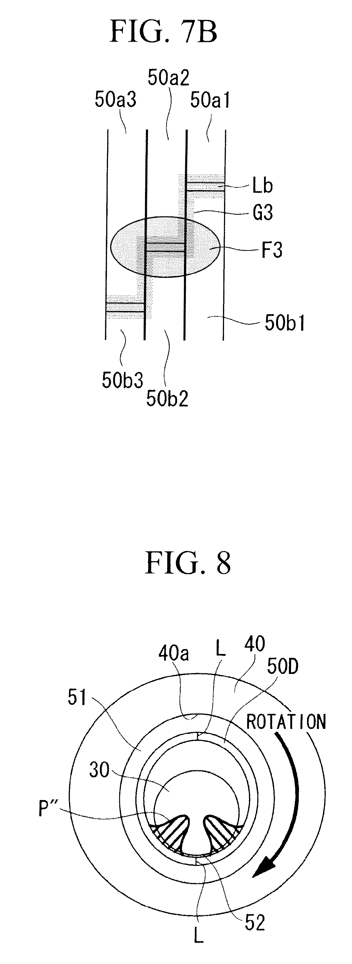

{Fig. 1A} Fig. 1A is a view showing a slide bearing used in a planet bearing structure According to a first embodiment of the present invention, and is an exploded perspective view showing a division structure of the slide bearing.
{Fig. 1B} Fig. 1B is a view showing the slide bearing used in the planet bearing structure according to the first embodiment of the present invention, and is an explanatory diagram of a load imposed on a division line of the slide bearing shown in Fig. 1A.
{Fig. 2} Fig. 2 is a view showing, in outline, a planetary-type gearbox as an example planet gearing to which the planet bearing structure of the present invention is applied.
{Fig. 3} Fig. 3 is a schematic configuration diagram of the planetary-type gearbox shown in Fig. 2, viewed from the axial direction.
{Fig. 4} Fig. 4 is a side view showing a wind turbine generator in which the planet bearing structure of the present invention is applied to the gearbox.
{Fig. 5} Fig. 5 is a main-portion sectional view showing an example schematic configuration in a nacelle of the wind turbine generator shown in Fig. 4.
{Fig. 6A} Fig. 6A is a view showing a slide bearing used in a planet bearing structure according to a second embodiment of the present invention, and is an exploded perspective view showing a division structure of the slide bearing.
{Fig. 6B} Fig. 6B is a view showing the slide bearing used in the planet bearing structure according to the second embodiments of the present invention, and is an explanatory diagram of a load imposed on a division line of the slide bearing shown in Fig. 6A.
{Fig. 7A} Fig. 7A is a view showing a slide bearing used in a planet bearing structure for a wind turbine generator, according to a third embodiment of the present invention, and is an exploded perspective view showing a division structure of the slide bearing.
{Fig. 7B} Fig. 7B is a view showing the slide bearing used in the planet bearing structure for a wind turbine generator, according to the third embodiment of the present invention, and is an explanatory diagram of a load imposed on a division line of the slide bearing shown in Fig. 7A.
{Fig. 8} Fig. 8 is a side view showing a slide bearing used in a planet bearing structure according to a fourth embodiment of the present invention.
{Fig. 9} Fig. 9 is a side view showing a slide bearing used in a planet bearing structure according to a fifth embodiment of the present invention.
{Fig. 10} Fig. 10 is a side view showing a conventional bearing structure in which a slide bearing is used.
{Fig. 11A} Fig. 11A is an exploded perspective view showing a conventional division structure of the slide bearing having the bearing structure shown in Fig. 10.
{Fig. 11B} Fig. 11B is an explanatory diagram of a load imposed on a slide-bearing division line, shown in Fig. 11A, of the slide bearing having the bearing structure shown in Fig. 10.
{Fig. 12A} Fig. 12A is a diagram for explaining a problem of a planet bearing structure in which a division-type slide bearing having joint surfaces rotates, and is a side view showing the planet bearing structure.
{Fig. 12B} Fig. 12B is a diagram for explaining a problem of a planet bearing structure in which the division-type slide bearing having joint surfaces rotates, and shows an oil film pressure distribution in a state where a load is not imposed on division lines.
{Fig. 12C} Fig. 12C is a diagram for explaining a problem of a planet bearing structure in which the division-type slide bearing having joint surfaces rotates, and shows an oil film pressure distribution in a state where a load is imposed on a division line.

### {Description of Embodiments}

A planet bearing structure applied to a wind turbine generator etc., according to one embodiment of the present invention will be described below based on the drawings.

### First Embodiment

The planet bearing structure according to the present invention is suitable for a gearbox, for example, in a wind turbine generator. A wind turbine generator 1 shown in Fig. 4 includes a tower (also referred to as "support column") 2 provided upright on a foundation B, a nacelle 3 provided at the top of the tower 2, and a rotor head 4 provided on a front side of the nacelle 3 such that it is supported so as to be able to rotate about a rotational axis in a substantially horizontal transverse direction.

A plurality of (for example, three) wind turbine blades 5 are attached to the rotor head 4 in a radiating pattern around the rotational axis thereof. Thus, the force of wind striking the wind turbine blades 5 from the rotational axis direction of the rotor head 4 is converted into power for rotating the rotor head 4 about the rotational axis.
An anemometer 7 that measures a wind speed value in the vicinity thereof and an anemoscope 8 that measures a wind direction are disposed at proper positions (for example, upper positions or the like) on the outer circumferential surface of the nacelle 3.

For example, as shown in Fig. 5, a gearbox 10 that is coupled to the rotor head 4 via a main shaft 9 and a power generator 12 that is coupled to an output shaft 11 of the gearbox 10 are disposed in the nacelle 3. Specifically, the rotational speed of the rotor head 4 is transmitted to the gearbox 10 coupled thereto via the main shaft 9 and is increased at the side of the output shaft 11 of the gearbox 10. Then, the power generator 12 is driven at the rotational speed increased through the gearbox 10 at the output side, and power is generated by the power generator 12.
Also, a wind turbine controller 13 that controls various operations of the wind turbine generator 1 is disposed in the nacelle 3.

The above-described gearbox 10 is usually configured by combining a plurality of stages of speed increasing mechanisms, and the rotational speed of the main shaft 9, serving as an input shaft, is increased to the output rotational speed of the final output shaft 11 via a plurality of speedup stages.
Figs. 2 and 3 show, in outline, a planetary-type sun-and-planet gearing (hereinafter, referred to as "planetary-type gearbox") 20 that executes, for example, first-stage speedup in the above-described gearbox 10, as an example sun-and-planet gearing to which the planet bearing structure of the present invention is applied. When the planetary-type gearbox 20 is used as a gearbox of the wind turbine generator 1, a carrier 21 is coupled to the main shaft 9 to rotate the planetary-type gearbox 20. In a configuration example shown in the figure, three planet pins 30 are secured to the carrier 21, and a planet gear 40 is rotatably attached to each of the planet pins 30 via a slide bearing 50 and a bearing back metal 51 of the slide bearing 50.
Note that, in Fig. 3, the relationship between the planet pin 30 and the slide bearing 50 (the difference between the inner diameter and the outer diameter) is shown more exaggeratedly than in reality for convenience of illustration.

The planetary-type gearbox 20 includes three planet gears 40 attached to the carrier 21 that rotates together with the main shaft 9, serving as the input shaft, and is configured such that the planet gears 40 revolve while being engaged with a sun gear 23 that rotates together with an output shaft 22 and engaged with an internal gear 25 secured to a housing 24. Specifically, the planetary-type gearbox 20 is an apparatus for increasing the rotational speed of the carrier 21 (the revolutions of the planet gears) coupled to the main shaft (input shaft) 9 according to the gear ratios set in the planet gears 40, the sun gear 23, and the internal gear 25; and the increased rotational speed is output to a second-stage speed increasing mechanism (not shown) or the like from the output shaft 22 coupled to the sun gear 23.
Further, in the housing 24 in which the planet gears 40 revolve together with the carrier 21, lubricating oil is stored at the level of a lubricating oil surface Lo shown in Fig. 3, for example. It is desirable that the lubricating oil surface Lo have a depth such that at least one shaft hole 40a of the revolving planet gears 40 is submerged in the lubricating oil.

As described above, in the gearbox 10 of the wind turbine generator 1, the slide bearing 50 attached on the inner circumferential surface of the shaft hole 40a of the planet gear 40 rotates about the planet pin 30, which is secured to the carrier 21, together with the planet gear 40.
A slide bearing 50A of this embodiment shown in Fig. 1A has a cylindrical shape obtained by jointing a pair of half-split cylinders 50a and 50b whose sliding surfaces are made of PEEK resin. Therefore, the slide bearing 50A has two division lines La that are formed by axis-wise joint surfaces and that intersect with the rotational direction, and the division lines La are inclined with respect to the axial direction. Specifically, both end faces of the respective half-split cylinders 50a and 50b that extend in the axial direction serve as the joint surfaces to form the two division lines La intersecting with the rotational direction. Oil film pressure does not occur in the division lines La and their peripheral regions G2 because it is released through minute gaps when a bearing load is imposed.

In the embodiment shown in Figs. 1A and 1B, the above-described division lines La are formed so as to be inclined with respect to the axial direction of the slide bearing 50A. Specifically, the end faces of the half-split cylinders 50a and 50b form diagonal lines inclined from a line parallel to the axial direction, and therefore, the division lines La intersect with the rotational direction of the slide bearing 50 and has an inclination angle with respect to a line orthogonal to the rotational direction thereof.
In this case, it is preferable that the inclination angle be larger than a region F2 (see Fig. 1B) where oil film pressure occurs on the sliding surface of the bearing. Specifically, the division lines La need to be inclined such that at least part of each of the division lines La is necessarily located outside the region F2, in other words, the whole length of the division line La is not located inside the region F2, even when the position of the bearing-pressure imposed on the sliding surface is moved in the rotational direction due to the rotation of the slide bearing 50A. Note that, in the structure in which the half-split cylinders 50a and 50b are jointed, as shown in Figs. 1A and 1B, it is preferable that the two inclined division lines La be inclined such that the ranges where the division lines La exist are equal to or larger than 1/5 of the circumferential length, that is, the division surfaces La exist in the ranges equal to or larger than 1/5 of the circumference of the sliding surface.

With this planet bearing structure for the wind turbine generator 1, since the sliding surface of the slide bearing 50A has the two division lines La intersecting with the rotational direction, and the division lines La are inclined with respect to the axial direction, a bearing load is not imposed on the whole axis-wise lengths of the division lines La on the sliding surface.
Specifically, on the sliding surface of the slide bearing 50A, a bearing load is imposed on only a substantially straight narrow region with which the planet pin 30 is brought into contact, in the axis-wise straight line orthogonal to the rotational direction of the slide bearing 50A; however, since the division lines La are formed so as to be inclined, the bearing-load imposed region (the region F2 where the oil film pressure occurs) on the sliding surfaces intersects and overlaps with only a partial area of each of the division lines La, which diagonally run across the sliding surface of the slide bearing 50A. Therefore, the whole lengths of the division lines La do not intersect or overlaps with the substantially elliptical-shape bearing-load imposed region F2, whose long axis corresponds to the axis-wise width of the sliding surface.

Therefore, even in a state in which the bearing-load imposed region F2 has an area that intersects and overlaps with the division lines La and on which oil film pressure is not formed, the bearing-load imposed region F2 has, at the same time, an area that does not intersect or overlap with the division lines La and on which oil film pressure is formed. This oil film pressure can support the bearing load.
Therefore, even when the bearing load is imposed on the division surfaces La, an area where oil film pressure is not formed is reduced, thereby reducing the risk of causing seizure or wear on the slide bearing 50A. As a result, as described above, it is possible not only to employ the division-type slide bearing 50A using PEEK resin, for which the joint surfaces are unavoidable, as a planet bearing of the wind turbine generator 1, but also to employ another slide bearing in which the division surfaces La are similarly formed, specifically, a slide bearing having a wrapped-bush structure or a half-split structure, which can be inexpensively manufactured, as a planet bearing of the wind turbine generator 1.

### Second Embodiment

Next, a planet bearing structure according to a second embodiment of the present invention will be described based on Figs. 6A and 6B. Note that identical reference symbols are assigned to the same parts as those of the above-described embodiment, and a detailed description thereof will be omitted.
In a slide bearing 50B of the embodiment shown in Fig. 6A, division lines Lb that are stepwise in the axial direction are formed instead of the inclined division lines La. Oil film pressure does not occur in the division lines Lb and their peripheral regions G3 because it is released when a bearing load is imposed. Note that, in a configuration example shown in the figure, the division lines Lb have three steps; however, the number of steps is not limited thereto.

Since the division lines Lb are formed stepwise in the axial direction, the bearing load is not imposed on the whole axis-wise lengths of the division lines Lb on the sliding surface. Specifically, on the sliding surface of the slide bearing 50B, the bearing load is imposed on a narrow straight region with which the planet pin 30 is brought into contact and that is orthogonal to the rotational direction of the slide bearing 50B. Thus, the bearing-load imposed region (a region F3 where oil film pressure occurs) on the sliding surface intersects with only a partial area of each of the stepwise division lines Lb, which run across the sliding surface of the slide bearing 50B in a stepwise manner. In this case, the term "intersect" includes a state where the bearing-load imposed region overlaps with portions of the division lines Lb that are orthogonal to the rotational direction. Specifically, the whole lengths of the division lines Lb do not intersect with the substantially elliptical bearing-load imposed region F3, whose long axis corresponds to the axis-wise width of the sliding surface.

Therefore, even in a state in which the bearing-load imposed region F3 has an area that intersects or overlaps with the division lines Lb and on which oil film pressure is not formed, the bearing-load imposed region F3 has, at the same time, an area that does not intersect or overlap with the division lines Lb and on which oil film pressure is formed. This oil film pressure can support the bearing load.
Therefore, even when the bearing load is imposed on the division surfaces Lb, an area where oil film pressure is not formed is reduced, thereby reducing the risk of causing seizure or wear on the slide bearing 50B. As a result, as described above, it is possible not only to employ the slide bearing 50B using PEEK resin, for which the joint surfaces are unavoidable, as a planet bearing of the wind turbine generator 1, but also to employ another slide bearing in which division surfaces Lb are similarly formed, as a planet bearing of the wind turbine generator 1.
Further, since the division lines Lb are stepwise, an advantage is afforded in that the half-split cylinders 50a and 50b constituting the slide bearing 50B are not mutually shifted in the axial direction even when a force in the circumferential direction is imposed on the slide bearing 50B.

### Third Embodiment

Next, a planet bearing structure according to a third embodiment of the present invention will be described based on Figs. 7A and 7B. Note that identical reference symbols are assigned to the same parts as those of the above-described embodiments, and a detailed description thereof will be omitted.
In a slide bearing 50C of the embodiment shown in Fig. 7A, the slide bearing 50C is divided into a plurality of slide bearing parts in the width direction (axial direction) . In a configuration example shown in the figure, division lines Lb of slide bearing components 50a1 and 50b1, slide bearing components 50a2 and 50b2, and slide bearing components 5Oa3 and 50b3, which constitute the slide bearing parts made by the three width-wise division, are mutually shifted in the rotational direction, that is, the phases of the division lines Lb are shifted, thus easily forming stepwise division lines in the whole of the slide bearing 50C.

Further, when the slide bearing 50C is divided into a plurality of slide bearing parts in the width direction, it is easy to manufacture the slide bearing 50C for the gearbox 10 even if the gearbox 10 is also increased in size as the wind turbine generator 1 becomes larger.
Further, the division structure for the slide bearing is not limited to the slide bearing in which the stepwise division lines Lb are formed, and it can be applied to the slide bearing 50A, in which the inclined division lines La are formed, even if the slide bearing 50A is increased in size.

### Fourth Embodiment

Next, a planet bearing structure according to a fourth embodiment of the present invention will be described based on Fig. 8. Note that identical reference symbols are assigned to the same parts as those of the above-described embodiments, and a detailed description thereof will be omitted.
A slide bearing 50D of the embodiment shown in Fig. 8 is applied to the gearbox 10 of the wind turbine generator 1, is attached on the inner circumferential surface of the shaft hole 40a of the planet gear 40, and rotates about the planet pin 30 secured to the carrier 21, together with the planet gear 40.

In this embodiment, the sliding surface of the slide bearing 50D has one or more division lines L that are formed by axis-wise joint surfaces and that intersect with the rotational direction. Then, a bearing-load avoiding portion 52 is provided at the positions of any of the division lines on the sliding surface and is configured so as to form oil film pressure at both sides of the division line L in the rotational direction to receive a bearing load. The bearing-load avoiding portion 52 is a concave space produced between an outer circle of double-circle rotational trajectories traced by the rotation of the sliding surface and the outer circumferential surface of the planet pin 30. For example, in the slide bearing 50D in which the half-split cylinders 50a and 50b are jointed to form two division lines L, when the division lines L are located along the long axis direction of the elliptical slide bearing 50D, the concave space with which the planet pin 30 is not brought into contact is produced on the sliding surface, and the bearing load can be supported by the oil film pressure formed at both sides of the concave space. Specifically, in this case, the bearing-load avoiding portion 52 is a concave space that is produced between the outer circumferential surface of the planet pin 30 and a large-diameter outer rotational trajectory traced by the long axis in the double-circle rotation trajectories traced by the long axis and the short axis of the elliptical slide bearing 50D, and at which the planet pin 30 is not brought into contact with the sliding surface.

In the planet bearing structure for the wind turbine generator 1, the sliding surface of the slide bearing 50D has one or more division lines L intersecting with the rotational direction, and the bearing-load avoiding portion 52, which is a concave space, is provided at the position of any of the division lines on the sliding surface, so as to receive the bearing load at both sides of the division line L in the rotational direction.
At this time, since oil film pressure (see an oil film pressure distribution indicated by reference symbol P" in the figure) is formed at both sides of the division line L in the rotational direction, and the oil film pressure can support the bearing load imposed on the sliding surface, it is possible to reduce the risk of causing seizure or wear in the slide bearing 50D.

### Fifth Embodiment

Finally, a planet bearing structure according to a fifth embodiment of the present invention will be described based on Fig. 9. Note that identical reference symbols are assigned to the same parts as those of the above-described embodiments, and a detailed description thereof will be omitted.
A slide bearing 50E of the embodiment shown in Fig. 9 is applied to the gearbox 10 of the wind turbine generator 1, is attached on the inner circumferential surface of the shaft hole 40a of the planet gear 40, and rotates about the planet pin 30 secured to the carrier 21, together with the planet gear 40.

In this embodiment, the sliding surface of the slide bearing 50E has one or more division lines L that are formed by axis-wise joint surfaces and that intersect with the rotational direction. Then, bearing-load avoiding portions 52A are provided at the positions of the division lines on the sliding surface and are configured so as to form oil film pressure at both sides of the respective division lines L in the rotational direction to receive a bearing load. The bearing-load avoiding portions 52A are concave spaces produced at the outer circumferential side of a circular rotational trajectory traced by the rotation of the sliding surface. For example, in the slide bearing 50E in which the half-split cylinders 50a and 50b are jointed to form the two division lines L, the bearing-load avoiding portions 52A are concave portions formed at positions corresponding to the division lines L, on the inner circumferential surface of the bearing back metal 51 disposed on the outer circumference of the slide bearing 50E.

When the above-described bearing-load avoiding portions 52A are formed, the rigidity of the slide bearing 50E is reduced at the positions of the division lines on the sliding surface, that is, the slide bearing 50E receiving the bearing load bends toward the concave portions of the bearing-load avoiding portions 52A, thus producing the concave spaces between the sliding surface of the slide bearing 50E deformed due to the bearing load and the planet pin 30. Therefore, at the positions of the division lines on the sliding surface, regions that are not brought into contact with the planet pin 30, or concave spaces that are regions on which only the bearing load that is significantly smaller than a usual bearing load is imposed, are formed; and oil film pressure (see an oil film pressure distribution indicated by reference symbol P" in the figure) is formed at both sides of the respective concave spaces, so as to support the bearing load. Therefore, it is possible to reduce the risk of causing seizure or wear in the slide bearing 50E.

In this way, according to the planet bearing structures of the respective embodiments described above, it is possible to prevent or suppress the release of oil film pressure through the division lines formed on the sliding surface of the slide bearing and to improve and stabilize the oil film formation at the positions of the division lines. Further, the bearing load can be supported at portions other than the positions of the division lines through which the oil film pressure is released. As a result, since the risk of causing seizure or wear is reduced on the sliding surface of the slide bearing, it is possible to employ, as the planet bearing, in the planet bearing structure constituting the gearbox of the wind turbine generator, not only a slide bearing using PEEK resin, for which formation of the division lines is unavoidable, but also a slide bearing having a wrapped-bush structure or a half-split structure, which can be manufactured at a low cost. Therefore, it is possible to employ an inexpensive slide bearing for the gearbox of the wind turbine generator and to improve the reliability and the durability of the wind turbine generator.
Note that the present invention is not limited to the above-described embodiments and can be appropriately modified without departing from the scope thereof. For example, the present invention can be applied to a case where a slide bearing is formed in a substantially C-shape to have one joint surface (division surface).

### {Reference Signs List}

1 wind turbine generator
3 nacelle
4 rotor head
5 wind turbine blade
9 main shaft
10 gearbox
11 output shaft
12 power generator
20 planetary-type sun-and-planet gearing (planetary-type gearbox)
21 carrier
22 output shaft
23 sun gear
24 housing
25 internal gear
30 planet pin
40 planet gear
50, 50A to 50E slide bearing
51 bearing back metal
52, 52A bearing-load avoiding portion
L, La, Lb joint surface (division line)

## Claims

1. A planet bearing structure comprising a slide bearing attached on the inner circumferential surface of a shaft hole of a planet gear constituting a gearbox, the slide bearing rotating about a planet pin that is secured to a carrier, together with the planet gear, wherein:
a sliding surface of the slide bearing has one or more division lines that are formed by axis-wise joint surfaces and that intersect with the rotational direction; and
the division lines are formed in an inclined state with respect to the axial direction or in a stepwise manner in the axial direction.

2. A planet bearing structure according to claim 1, wherein the slide bearing is divided into a plurality of slide bearing parts in the width direction.

3. A planet bearing structure comprising a slide bearing attached on the inner circumferential surface of a shaft hole or a planet gear constituting a gearbox, the slide bearing rotating about a planet pin that is secured to a carrier, together with the planet gear, wherein:
a sliding surface of the slide bearing has one or more division lines that are formed by axis-wise joint surfaces and that intersect with the rotational direction; and
a bearing-load avoiding portion is provided at the position of any of the division lines on the sliding surface to receive a bearing load at both sides of the division line in the rotational direction.

4. A planet bearing structure according to claim 3, wherein the bearing-load avoiding portion is a concave space produced between an outer circle of a double-circle rotational trajectory traced by the rotation of the sliding surface and the outer circumferential surface of the planet pin.

5. A planet bearing structure according to claim 3, wherein the bearing-load avoiding portion is a concave space produced at an outer circumferential side of a circle rotational trajectory traced by the rotation of the sliding surface.
